# EUROPEAN PATENT APPLICATION

(11) **EP 4 588 976 A1**
(43) Date of publication of application: **23.07.2025**
(21) Application number: 24153253.0
(22) Date of filing: 22.01.2024
(51) Int. Cl.: C08L 63/00

(54) **HEAT-CURING EPOXY RESIN COMPOSITION WITH HIGH CORROSION RESISTANCE**

(71) Applicant: Sika Technology AG, 6340 Baar (CH)
(72) Inventor: GALLO, Dominique, 8106 Adlikon bei Regensdorf (CH)
(74) Representative: Sika Patent Attorneys

(57) **Abstract**

The present invention relates to thermosetting one-component epoxy resin compositions comprising a liquid epoxy resin **A,** latent curing agent **B,** toughness improver **D** and at least one polyphenylene ether **PPE,** wherein the weight ratio of the sum of the at least one liquid epoxy resin **A** and the at least one polyphenylene ether **PPE** to the at least one toughness improver **D ((A+PPE)/D)** is from 2.7 - 12 and wherein the weight ratio of the at least one toughness improver **D** to the at least one polyphenylene ether **PPE (D/PPE)** is from 0.85 - 5. The compositions feature improved corrosion resistance and good usability as a one-component thermosetting adhesive, especially as a thermosetting one-component bodywork adhesive in motor vehicle construction.

## Description

### Technical field

The invention relates to the field of thermosetting one-component epoxy resin compositions, especially for use as bodywork adhesive.

### Prior art

Thermosetting epoxy resin compositions have long been known. Efforts have already been made for some time to remedy or at least significantly reduce the great disadvantage of epoxy resin compositions, namely their brittleness, the effect of which is that the cured epoxy resin composition cracks or is destroyed under impact stress. Attempts have already been made to do this by the addition of impact modifiers or by chemical modification of epoxy resins.

An important field of use of thermosetting epoxy resin compositions is in motor vehicle construction, especially in bonding in the bodywork. After the application of the epoxy resin composition, the bodywork is heated in the cathodic electrocoating oven, because of which the thermosetting epoxy resin composition is cured.

However, efforts are currently under way in the market to increase the corrosion resistance of said thermosetting epoxy resin compositions. Thus, there is a great need on the market for thermosetting epoxy resin compositions containing impact modifiers that display a sufficient resistance to corrosion. There is therefore a need for toughened thermosetting one-component epoxy resin compositions which improved corrosion resistance.

### Summary of the invention

It is therefore an object of the present invention to provide toughened thermosetting one-component epoxy resin compositions that have improved corrosion resistance.

This object was surprisingly achieved by a thermosetting one-component epoxy resin composition as claimed in claim 1. This epoxy resin composition has particularly good usability as a one-component thermosetting adhesive, especially as a thermosetting one-component bodywork adhesive in motor vehicle construction.

### Ways of executing the invention

The present invention relates to thermosetting one-component epoxy resin compositions comprising:
a) at least one liquid epoxy resin **A** having an average of more than one epoxy group per molecule;
b) at least one curing agent **B** for epoxy resins, preferably dicyandiamide; and
c) at least one at least one toughness improver **D,** preferably selected from the group consisting of terminally blocked polyurethane polymers **D1** and liquid rubbers **D2,** preferably a terminally blocked polyurethane polymer **D1;**
d) at least one polyphenylene ether **PPE,** preferably having on molecular ends thereof an average of 1.5 to 3 phenolic hydroxyl groups per molecule.

The weight ratio of the sum of the at least one liquid epoxy resin **A** and the at least one polyphenylene ether **PPE** to the at least one toughness improver **D ((A+PPE)/D)** is from 2.7 - 12. The weight ratio of the at least one toughness improver **D** to the at least one polyphenylene ether **PPE (D/PPE)** is from 0.85 - 5.

In this document, the use of the term "independently" in connection with substituents, radicals or groups should be interpreted such that the substituents, radicals or groups having the same designation in the same molecule may occur simultaneously with different meanings.

The prefix "poly" in substance names such as "polyol", "polyisocyanate", "polyether" or "polyamine" in the present document indicates that the respective substance, in a formal sense, contains more than one of the functional groups that occur in its name per molecule.

In the present document, "molecular weight" is understood to mean the molar mass (in grams per mole) of a molecule. "Average molecular weight" is understood to mean the number-average molecular weight Mₙ of an oligomeric or polymeric mixture of molecules, which is typically determined by means of GPC against polystyrene as standard.

A "primary hydroxyl group" refers to an OH group bonded to a carbon atom having two hydrogens.

In the present document, the term "primary amino group" refers to an NH₂ group bonded to one organic radical, while the term "secondary amino group" refers to an NH group bonded to two organic radicals which may also together be part of a ring. Accordingly, an amine having one primary amino group is referred to as "primary amine", one having a secondary amino group correspondingly as "secondary amine", and one having a tertiary amino group as "tertiary amine".

In the present document, "room temperature" refers to a temperature of 23°C.

The thermosetting one-component epoxy resin composition comprises a) at least one liquid epoxy resin **A** having an average of more than one epoxy group per molecule.

Preferred liquid epoxy resins **A** have the formula (I)

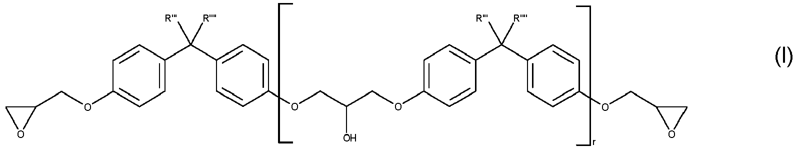

In this formula, the substituents R‴ and Rʺʺ are each independently H or CH₃, preferably H. In addition, the index r has a value of 0 to 1. Preferably, r has a value of less than 0.2.

These are thus preferably diglycidyl ethers of bisphenol A (DGEBA), of bisphenol F and of bisphenol A/F (here, the designation "A/F" refers to a mixture of acetone with formaldehyde which is used as the reactant in the preparation thereof).

Most preferably, the at least one liquid epoxy resins **A** are diglycidyl ethers of bisphenol F. Such liquid resins are available, for example, as Araldite^{®} GY 250, Araldite^{®} PY 304, Araldite^{®} GY 282 (Huntsman), or D.E.R.^{™} 331, or D.E.R. ^{™} 330 (Olin), or Epikote 828 (Hexion).

Moreover, so-called novolacs are suitable epoxy resins **A.** These have in particular the following formula: 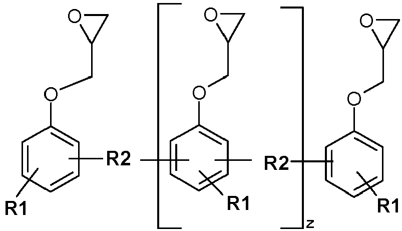 with 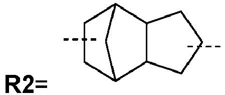 or CH₂, **R1** = H or methyl and z = 0 to 7.

In particular, they are phenol or cresol novolacs (**R2** = CH₂).

Such epoxy resins are commercially available under the trade names EPN or ECN as well as Tactix^{®} 556 from Huntsman or under the product line D.E.N.^{™} from Dow Chemical.

Most preferably, the liquid epoxy resin **A** is a liquid epoxy resin of the formula (I), wherein the substituents R‴ and Rʺʺ are each H and the index r has a value of less than 0.2.

Preferably, the proportion of the at least one liquid epoxy resin **A1** is 35 - 65 % by weight, more preferably 40 - 60 % by weight, most preferably 45 - 55 % by weight, based on the total weight of the thermosetting one-component epoxy resin composition.

The composition of the invention also contains b) at least one latent curing agent **B** for epoxy resins. The at least one latent curing agent **B** is preferably selected from dicyandiamide, guanamines, guanidines, anhydrides of polybasic carboxylic acids and aminoguanidines.

More preferably, the latent curing agent **B** is selected from guanidines, especially dicyandiamide.

The amount of the latent curing agent **B** for epoxy resins is advantageously 0.1-30% by weight, especially 1-20% by weight, preferably 5-15% by weight, especially preferably 7.5-12.5 % by weight, based on the weight of the epoxy resin **A.**

Preferably, in the thermosetting one-component epoxy resin composition, the ratio of the proportion of the sum of the epoxy groups of the liquid epoxy resin **A** in mol / proportion of curing agent **B** in mol **(A/B)** is 4 - 8, preferably 4.5 - 7.0, more preferably 5.0 - 6.0, most preferably 5.0 - 5.5.

Preferably, the thermosetting one-component epoxy resin composition additionally contains at least one accelerator **C** for epoxy resins. This is advantageous especially with respect to curing at lower temperatures.

Preferably, the accelerator **C** for epoxy resins is selected from the list consisting of substituted ureas, imidazoles, imidazolines and blocked amines, preferably imidazoles and substituted ureas, most preferred substituted ureas.

This preferably comprises substituted ureas of the formula (III) 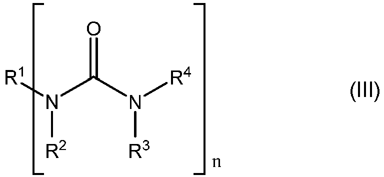 in which R¹ and R² are independently hydrogen atoms or monovalent alkyl radicals which have 1 to 10 carbon atoms and optionally also comprise oxygen atoms, nitrogen atoms and/or aromatic units or together form a divalent alkyl radical having 1 to 10 carbon atoms, and which may additionally comprise oxygen atoms, nitrogen atoms or aromatic units; R³ and R⁴ are independently hydrogen atoms or monovalent alkyl radicals which have 1 to 10 carbon atoms and optionally also comprise oxygen atoms or nitrogen atoms; and the index n has a value of 1 or 2.

The substituted urea of the formula (III) is preferably selected from the group consisting of p-chlorophenyl-N,N-dimethylurea (monuron), 3-phenyl-1,1-dimethylurea (fenuron), 3,4-dichlorophenyl-N,N-dimethylurea (diuron), N-methylurea, N,N-dimethylurea, N,N'-dimethylurea, N,N,N'-trimethylurea, N,N,N',N'-tetramethylurea and derivatives thereof, where some or all methyl groups are instead ethyl groups.

Preferably, R¹ and R² are independently hydrogen atoms or monovalent linear or branched alkyl radicals which have 1 to 10, preferably 1 to 5, more preferably 1 to 4, carbon atoms and optionally together constitute a divalent alkyl radical that forms a ring structure with the adjacent nitrogen atom, and/or R³ and R⁴ independently represent hydrogen atoms or monovalent linear or branched alkyl radicals which have 1 to 10, preferably 1 to 5, more preferably 1 to 4, carbon atoms and optionally together constitute a divalent alkyl radical that forms a ring structure with the adjacent nitrogen atom.

Very particularly preferred substituted ureas of the formula (III) are those in which R¹ and R² in formula (III) are both hydrogen atoms and/or in which R³ and R⁴ are both ethyl or methyl groups, preferably methyl groups.

Further preferred urea derivatives of the formula (III) include those in which R¹, R², R³ and R⁴ in formula (III) all represent ethyl or methyl, preferably methyl groups, or in which R¹, R² and R³ represent ethyl or methyl, preferably methyl, and R⁴ is a hydrogen atom, or where R¹ and R⁴ both represent hydrogen atoms, and R² and R³ both represent ethyl or methyl groups, preferably methyl groups.

Suitable urea derivatives are commercially available, for example, under the Dyhard ^{®} trade name (from AlzChem Group AG), under the Omicure^{®} trade name (from CVC Thermoset Specialties), under the Amicure^{®} trade name (from Evonik) and from Sigma Aldrich.

Preferably, the ratio of the proportion of accelerator **C** in grams per mole of the epoxy groups of the liquid epoxy resin **A** is preferably 0.1 - 5.0 g/mol of epoxy groups, especially 0.3 - 3.0 g/mol of epoxy groups, more preferably 0.5 - 2.0 g/mol of epoxy groups, most preferably 0.6 - 1.0 g/mol of epoxy groups.

Preferably, the one-component thermosetting epoxy resin composition comprises at least one toughness improver **D.** The toughness improvers **D** may be solid or liquid, preferably liquid.

The toughness improver **D** is preferably selected from the group consisting of terminally blocked polyurethane polymers **D1,** liquid rubbers **D2** and and core-shell polymers **D3.** Particular preference is given to a terminally blocked polyurethane polymer **D1.**

It is preferably a terminally blocked polyurethane polymer **D1** blocked with a blocking group that is eliminated at a temperature above 100°C.

Preferred blocking groups are especially firstly phenols or bisphenols. Preferred examples of such phenols and bisphenols are especially phenol, cresol, resorcinol, catechol, 4-Hydroxyanisole (HQMME), cardanol (3-pentadecenylphenol (from cashew nutshell oil)), nonylphenol, phenols that have been reacted with styrene or dicyclopentadiene, bisphenol A, bisphenol F and 2,2'-diallylbisphenol A.

The terminally blocked polyurethane prepolymer is prepared from a linear or branched polyurethane prepolymer terminated by isocyanate groups with one or more isocyanate-reactive compounds. If two or more such isocyanate-reactive compounds are used, the reaction can be effected sequentially or with a mixture of these compounds.

The reaction is preferably effected in such a way that the one or more isocyanate-reactive compounds are used stoichiometrically or in a stoichiometric excess in order to ensure that all NCO groups have been converted.

The polyurethane prepolymer with isocyanate end groups can be prepared from at least one diisocyanate or triisocyanate and from a polymer **Q_{PM}** having terminal amino, thiol or hydroxyl groups and/or from an optionally substituted polyphenol **Q_{PP},** preferably polymer **Q_{PM}** having terminal amino, thiol or hydroxyl groups.

Suitable diisocyanates are aliphatic, cycloaliphatic, aromatic or araliphatic diisocyanates, especially commercial products such as methylene diphenyl diisocyanate (MDI), hexamethylene diisocyanate (HDI), toluene diisocyanate (TDI), toluidine diisocyanate (TODI), isophorone diisocyanate (IPDI), trimethylhexamethylene diisocyanate (TMDI), 2,5- or 2,6-bis(isocyanatomethyl)bicyclo[2.2.1]heptane, naphthalene 1,5-diisocyanate (NDI), dicyclohexylmethyl diisocyanate (H₁₂MDI), p-phenylene diisocyanate (PPDI), m-tetramethylxylylene diisocyanate (TMXDI), etc. and dimers thereof. Preference is given to HDI, IPDI, MDI or TDI.

Suitable triisocyanates are trimers or biurets of aliphatic, cycloaliphatic, aromatic or araliphatic diisocyanates, especially the isocyanurates and biurets of the diisocyanates described in the previous paragraph. It is of course also possible to use suitable mixtures of di- or triisocyanates.

Especially suitable polymers **Q_{PM}** having terminal amino, thiol or hydroxyl groups are polymers **Q_{PM}** having two or three terminal amino, thiol or hydroxyl groups.

The polymers **Q_{PM}** advantageously have an equivalent weight of 300-6000, especially of 600-4000, preferably of 700-2200, g/equivalent of NCO-reactive groups.

Preferred polymers **Q_{PM}** are polyols having average molecular weights between 600 and 6000 daltons, selected from the group consisting of polyethylene glycols, polypropylene glycols, polyethylene glycol-polypropylene glycol block polymers, polybutylene glycols, hydroxyl-terminated polybutadienes, hydroxyl-terminated butadiene-acrylonitrile copolymers and mixtures thereof.

Especially preferred polymers **Q_{PM}** are α-ω-dihydroxy polyalkylene glycols having C₂-C₆-alkylene groups or having mixed C₂-C₆-alkylene groups, terminated by amino, thiol or, preferably, hydroxyl groups. Particular preference is given to polypropylene glycols or polybutylene glycols. Particular preference is further given to hydroxyl group-terminated polyoxybutylenes.

Especially suitable polyphenols **Q_{PP}** are bis-, tris- and tetraphenols. This is understood to mean not just straight phenols but optionally also substituted phenols. The nature of the substitution may be very varied. More particularly, this is understood to mean substitution directly on the aromatic ring to which the phenolic OH group is bonded. Phenols are additionally understood to mean not just monocyclic aromatics but also polycyclic or fused aromatics or heteroaromatics that have the phenolic OH group directly on the aromatic or heteroaromatic system.

In a preferred embodiment, the polyurethane prepolymer is prepared from at least one diisocyanate or triisocyanate and from a polymer **Q_{PM}** having terminal amino, thiol or hydroxyl groups. The polyurethane prepolymer is prepared in a manner known to the person skilled in the art of polyurethane, especially by using the diisocyanate or triisocyanate in a stoichiometric excess in relation to the amino, thiol or hydroxyl groups of the polymer **Q_{PM}.**

The polyurethane prepolymer having isocyanate end groups preferably has elastic character. It preferably exhibits a glass transition temperature Tg of less than 0°C.

The toughness improver D may be a liquid rubber **D2.** This may be, for example, a carboxy- or epoxy-terminated polymer.

In a first embodiment, this liquid rubber may be a carboxy- or epoxy-terminated acrylonitrile/butadiene copolymer or derivative thereof. Such liquid rubbers are commercially available, for example, under the Hypro / Hypox^{®} CTBN and CTBNX and ETBN name from Emerald Performance Materials. Suitable derivatives are especially elastomer-modified prepolymers having epoxy groups, as sold commercially under the Polydis^{®} product line, especially from the Polydis^{®} 36.. product line, by Struktol^{®} (Schill+Seilacher Gruppe, Germany) or under the Albipox product line (Evonik, Germany).

In a second embodiment, this liquid rubber may be a polyacrylate liquid rubber which is fully miscible with liquid epoxy resins and separates to form microdroplets only in the course of curing of the epoxy resin matrix. Such polyacrylate liquid rubbers are available, for example, under the 20208-XPA name from Dow.

It is of course also possible to use mixtures of liquid rubbers, especially mixtures of carboxy- or epoxy-terminated acrylonitrile/butadiene copolymers or derivatives thereof.

The toughness improver **D,** in a third embodiment, may be a core-shell polymer **D3.** Core-shell polymers consist of an elastic core polymer and a rigid shell polymer. Particularly suitable core-shell polymers consist of a core of elastic acrylate or butadiene polymer encased by a rigid shell of a rigid thermoplastic polymer. This core-shell structure either forms spontaneously as a result of separation of a block copolymer or is defined by the conduct of the polymerization as a latex or suspension polymerization with subsequent grafting. Preferred core-shell polymers are what are called MBS polymers, which are commercially available under the Clearstrength^{™} trade name from Arkema, Paraloid^{™} from Dow or F-351^{™} from Zeon.

Preferably, the proportion of toughness improver **D,** especially of terminally blocked polyurethane polymer **D1.**

Preferably, the amount of the toughness improver **D** is 5 - 22.5 % by weight, especially 10 - 20 % by weight, preferably 12.5 - 17.5 % by weight, based on the total weight of the thermosetting one-component epoxy resin composition.

The composition of the invention also contains d) at least one polyphenylene ether **PPE,** preferably having on molecular ends thereof an average of 1.5 to 3 phenolic hydroxyl groups per molecule.

The polyphenylene ether **PPE** is preferably selected from the list consisting of a polyarylene ether copolymer composed of 2,6-dimethylphenol and either of or both a bifunctional phenol and a trifunctional phenol;
and polyphenylene ethers comprising poly(2,6-dimethyl-1,4-phenylene oxide).

Here, "bifunctional phenol" refers to a phenol compound having two phenolic hydroxyl groups on the molecule, such as tetramethylbisphenol A. "Trifunctional phenol" refers to a phenol compound having three phenolic hydroxyl groups on the molecule.

Preferably, the polyphenylene ether **PPE** is of the formula (II)

| | |
|---|---|
| 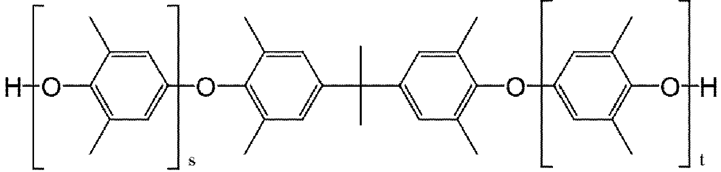 | (II) |

wherein the combined value of "s" and "t" is from 1 to 30, preferably, "s" is from 0 to 20 and "t" is preferably from 0 to 20.

The polyphenylene ether **PPE** preferably has an intrinsic viscosity, as measured in 25 °C methylene chloride, of from 0.03 to 0.12 dL/g. The term "intrinsic viscosity" refers to the intrinsic viscosity measured in 25° C methylene chloride. Preferably, this is the value obtained by measuring a 0.18 g/45 mL methylene chloride solution (liquid temperature, 25° C.) with a viscometer. The viscometer preferably is the AVS500 Visco System available from Schott Instruments GmbH.

The weight ratio of the sum of the at least one liquid epoxy resin **A** and the at least one polyphenylene ether **PPE** to the at least one toughness improver **D ((A+PPE)/D)** is from 2.7 - 12. A value of 12 or less is advantageous with respect to higher values of lap shear strength after corrosion testing. This can be seen, for example, in figure 1 in the comparison of E1-3 with Ref. 3-5. A value of 2.7 or more is advantageous with respect to higher values of lap shear strength, especially after corrosion testing. This can be seen, for example, in figure 1 in the comparison of E1 with Ref.1.

Preferably, the weight ratio of the sum of the at least one liquid epoxy resin **A** and the at least one polyphenylene ether **PPE** to the at least one toughness improver **D ((A+PPE)/D)** is from 3 - 8, preferably 3.5 - 6, more preferably 3.5 - 4.8. Said ratio is advantageous with respect to high values of lap shear strength, especially after corrosion testing, in combination with high values for E-modulus and tensile strength. This can be seen, for example, in figure 1 in the comparison of E1-3 with Ref. 3-5.

The weight ratio of the at least one toughness improver **D** to the at least one polyphenylene ether **PPE (D/PPE)** is from 0.85 - 5.

Preferably, the weight ratio of the at least one toughness improver **D** to the at least one polyphenylene ether **PPE (D/PPE)** is from 1 - 3, preferably 1.1 - 2.5, more preferably 1.3 - 1.8. Said ratio is advantageous with respect to high values of lap shear strength after corrosion testing in combination with high values for impact peel and T-peel. This can be seen, for example, in figure 1 in the comparison of E2 with Ref.1, E1 and E3.

It is further preferred, if the weight ratio of the at least one liquid epoxy resin **A** to the at least one polyphenylene ether **PPE (A/PPE)** is from 2 - 12.5, preferably 3 - 11, more preferably 4 - 7.5

It is further advantageous, if the weight ratio of the at least one liquid epoxy resin **A** to the at least one toughness improver **D (A/D)** is from 2.5 - 3.75, preferably 3 - 3.66, more preferably 3.2 - 3.5.

In a further preferred if the thermosetting one-component epoxy resin composition additionally comprises at least one filler **F.** Preference is given here to mica, talc, kaolin, wollastonite, feldspar, titanium oxide, syenite, chlorite, bentonite, montmorillonite, calcium carbonate (precipitated or ground), dolomite, quartz, silicas (fused or precipitated), cristobalite, calcium oxide, aluminum hydroxide, magnesium oxide, hollow ceramic beads, hollow glass beads, hollow organic beads, glass beads, color pigments. Particular preference is given to fillers selected from the group consisting of calcium carbonate, calcium oxide, wollastonite, titanium oxide, and fumed silicas.

Advantageously, the total proportion of the overall filler **F** is 5 - 35 % by weight preferably 10 - 25 % by weight, more preferably 15 - 20 % by weight, based on the total weight of the thermosetting one-component epoxy resin composition.

In a further preferred embodiment, the composition additionally comprises at least one epoxy-bearing reactive diluent **G.** Such reactive diluents are known to the person skilled in the art. Preferred examples of epoxy-bearing reactive diluents are:
- glycidyl ethers of monofunctional, saturated or unsaturated, branched or unbranched, cyclic or open-chain, C₄-C₃₀ alcohols, e.g. butanol glycidyl ether, hexanol glycidyl ether, 2-ethylhexanol glycidyl ether, allyl glycidyl ether, tetrahydrofurfuryl and furfuryl glycidyl ether, trimethoxysilyl glycidyl ether, and the like;
- glycidyl ethers of tri- or more than trifunctional, saturated or unsaturated, branched or unbranched, cyclic or open-chain, alcohols, such as epoxidized castor oil, epoxidized trimethylolpropane, epoxidized pentaerythritol or polyglycidyl ethers of aliphatic polyols, such as sorbitol, glycerol, trimethylolpropane, and the like;
- glycidyl ethers of phenol compounds and aniline compounds, such as phenyl glycidyl ether, cresyl glycidyl ether, p-tert-butylphenyl glycidyl ether, nonylphenol glycidyl ether, 3-n-pentadecenyl glycidyl ether (from cashewnutshell oil), N,N-diglycidylaniline, and the like;
- epoxidized amines, such as N,N-diglycidylcyclohexylamine, and the like;
- epoxidized mono- or dicarboxylic acids, such as glycidyl neodecanoate, glycidyl methacrylate, glycidyl benzoate, diglycidyl phthalate, tetrahydrophthalate and hexahydrophthalate, diglycidyl esters of dimeric fatty acids, and the like;
- epoxidized di- or trifunctional, low to high molecular weight polyether polyols, such as polyethylene glycol diglycidyl ether, polypropylene glycol diglycidyl ether, and the like.

Particular preference is given to p-*tert*-butylphenyl glycidyl ether.

Advantageously, the total proportion of the epoxy-bearing reactive diluent **G** is 0.1-5% by weight, preferably 1-4% by weight, especially preferably 1.5 - 4 % by weight, based on the total weight of the thermosetting one-component epoxy resin composition.

The composition may include further constituents, especially catalysts, stabilizers, especially heat and/or light stabilizers, thixotropic agents, plasticizers, solvents, mineral or organic fillers, blowing agents, dyes and pigments, anticorrosives, surfactants, defoamers and adhesion promoters.

Suitable plasticizers are especially phenol alkylsulfonates or N-butylbenzamide, as commercially available as Mesamoll^{®} or Dellatol BBS from Bayer.

Suitable stabilizers are especially optionally substituted phenols such as BHT or Wingstay^{®} T (Elkem), sterically hindered amines or N-oxyl compounds such as TEMPO (Evonik).

It is advantageous when the epoxy resin composition of the invention has a viscosity at 23°C of 300 - 2500 Pa*s, especially 500 - 2200 Pa*s, preferably 700 - 1500 Pa*s, more preferably 800 - 1200 Pa*s, especially measured with a rheometer in oscillation using a plate-plate geometry with the following parameters: 5 Hz, measurement gap 1 mm, plate-plate diameter 25 mm, 1% deformation. This is advantageous in that this assures good applicability.

It has been found that the thermosetting one-component epoxy resin compositions described are particularly suitable for use as one-component thermosetting adhesives, especially as a thermosetting one-component bodywork adhesive in motor vehicle construction. Such a one-component adhesive has a range of possible uses. Such adhesives are required for the bonding of heat-stable materials. Heat-stable materials are understood to mean materials which are dimensionally stable at a curing temperature of 100 - 220°C, preferably 120 - 200°C, at least during the curing time. In particular, these are metals and plastics, such as ABS, polyamide, polyphenylene ether, composite materials, such as SMC, unsaturated polyesters GFP, epoxy or acrylate composite materials. Preference is given to the use in which at least one material is a metal. A particularly preferred use is considered to be the bonding of identical or different metals, especially in bodywork construction in the automobile industry. The preferred metals are in particular steel, especially electrolytically galvanized, hot-dip-galvanized or oiled steel, Bonazinccoated steel, and post-phosphated steel, and also aluminium, especially in the variants which typically occur in automobile construction.

A further aspect of the present invention relates to a process for the bonding of heat-stable substrates, which comprises the stages:
i) applying a thermosetting one-component epoxy resin composition as described in detail above to the surface of a heat-stable substrate **S1,** especially of a metal;
ii) contacting the thermosetting one-component epoxy resin composition applied with the surface of a further heat-stable substrate **S2,** especially of a metal;
iii) heating the composition to a temperature of 100-220°C, especially of 120-200°C, preferably between 130 and 190°C, more preferably between 130 and 180°C.

The substrate **S2** consists here of the same material as or a different material from the substrate **S1.** The substrates **S1** and/or **S2** are in particular the aforementioned metals and plastics.

Preferably, in step iii), the composition is heated to a temperature of 100-220°C, especially of 120-200°C, preferably between 130 and 190°C, more preferably between 130 and 180°C, and the composition is left at the aforementioned temperature for 10 min - 6 h, 10 min - 2 h, 10 min - 60 min, 10 min - 30 min, 10 min - 20 min, more preferably 10 min - 15 min.

Such a method of bonding heat-stable materials results in an adhesive-bonded article. Such an article is preferably a vehicle or part of a vehicle.

A further aspect of the present invention accordingly relates to an adhesive-bonded article obtained from the abovementioned process. Furthermore, the compositions according to the invention are suitable not only for automobile construction but also for other fields of use. Particular mention should be made of related applications in the construction of transportation means, such as ships, trucks, buses or rail vehicles, or in the construction of consumer goods, such as, for example, washing machines.

The materials adhesive-bonded by means of a composition according to the invention are used at temperatures between typically 120°C and -40°C, preferably between 100°C and -40°C, in particular between 80°C and -40°C.

A particularly preferred use of the thermosetting one-component epoxy resin composition of the invention is the use thereof as a thermosetting one-component bodywork adhesive in motor vehicle construction or as a stiffening compound or as a foamable, thermosetting composition for the reinforcement of voids in structural components and reinforcing elements.

A further aspect of the present invention relates to a cured epoxy resin composition as obtained by heating a thermosetting one-component epoxy resin composition as described in detail above.

More preferably, the compositions of the invention have the following properties:
- Tensile strength, measured as described in the experimental section, of ≥ 14 MPa, especially ≥ 20 MPa, more preferably ≥ 25 MPa;
- Elongation at break, measured as described in the experimental section, of 1 - 20 %, especially 1.5 -10 %, more preferably 2.5 - 8 %;
- E-Modulus, measured as described in the experimental section, of ≥ 1200 MPa, especially ≥ 1400 MPa, more preferably ≥ 1600 MPa;
- LSS initial, measured as described in the experimental section, of > 25 MPa, especially ≥ 30 MPa, more preferably ≥ 32 MPa;
- LSS 90 cycles, measured as described in the experimental section, of > 18 MPa, especially ≥ 20 MPa, more preferably ≥ 22 MPa;
- IP @ 23°C, measured as described in the experimental section, of ≥ 7.5 N/mm, especially ≥ 10 N/mm, more preferably ≥ 12 N/mm;
- IP @ -30°C, measured as described in the experimental section, of ≥ 2.5 N/mm, especially ≥ 3.5 N/mm, more preferably ≥ 4.7 N/mm;
- T-peel, measured as described in the experimental section, of ≥ 4.5 N/mm, especially ≥ 5 N/mm, more preferably ≥ 5.5 N/mm.

The invention further encompasses the use of at least one polyphenylene ether **PPE,** preferably having on molecular ends thereof an average of 1.5 to 3 phenolic hydroxyl groups per molecule, as described above for increasing the corrosion resistance of a one-component thermosetting epoxy resin composition, especially a thermosetting epoxy adhesive, preferably in motor vehicle construction and sandwich panel construction. Preference is given to a thermosetting epoxy resin composition as described above.

The increase in the corrosion resistance is based on the comparison with one-component thermosetting epoxy resin compositions that do not contain any of the aforementioned polyphenylene ether **PPE.**

Corrosion resistance is preferably determined by measuring the lap shear strength after oven curing for 40 min at 180°C and followed by 90 cycles PV1210 ("LSS 90 cycles") (DIN EN 1465) of the one-component thermosetting epoxy resin composition, especially on the basis of the determination of the percentage decrease between the value of the lap shear strength after oven curing for 40 min at 180°C and the value of the lap shear strength after oven curing for 40 min at 180°C followed by 90 cycles PV1210 ("LSS 90 cycles"). Most preferably, the corrosion resistance is determined as described in the experimental section as show as "LSS loss" (percentage drop).

Preferably, the type and amount used of the at least one polyphenylene ether **PPE** correspond to the type and amount described above; more particularly, the types and amounts designated as preferred above are also used with preference. Preferably:
- the weight ratio of the sum of the at least one liquid epoxy resin **A** and the at least one polyphenylene ether **PPE** to the at least one toughness improver **D ((A+PPE)/D);**
- the weight ratio of the at least one toughness improver **D** to the at least one polyphenylene ether **PPE (D/PPE);**
- the weight ratio of the at least one liquid epoxy resin **A** to the at least one polyphenylene ether **PPE (A/PPE);**
- the proportion of the at least one polyphenylene ether **PPE,** based on the total weight of the one-component thermosetting epoxy resin composition;
have the values designated as preferred above in relation to the one-component thermosetting epoxy resin composition of the invention.

Preference is further given to the use of the at least one polyphenylene ether **PPE** especially in one-component thermosetting epoxy resin compositions in which the latent curing agent **B** is a guanidine, especially dicyandiamide, and the accelerator **C** for epoxy resins is selected from the list consisting of substituted ureas and blocked amines, especially substituted ureas.

### Examples

Some examples which further illustrate the invention, but which are not intended to restrict the scope of the invention in any way, are cited below.

### Preparation of a toughness improver ("D1")

150 g of poly-THF 2000 (OH number 57 mg/g KOH) and 150 of Liquiflex H (OH number 46 mg/g KOH) were dried under vacuum at 105°C for 30 minutes. Once the temperature had been reduced to 90°C, 61.5 g of IPDI and 0.14 g of dibutyltin dilaurate were added. The reaction was carried out under vacuum at 90°C until the NCO content was constant at 3.10% after 2.0 h (calculated NCO content: 3.15%). Subsequently, 96.1 g of cardanol were added as blocking agent. Stirring was continued at 105°C under vacuum until it was no longer possible to detect any free NCO. The product was used as such as toughness improver ***D1*.**

| | |
|---|---|
| A | Liquid aromatic epoxy resin, GY 285 (bisphenol F diglycidyl ether), epoxy equivalent (ISO 3001): 164 - 172 g/eq, Huntsman |
| PPE | Polyphenylene ether having the structure shown in formula (II): SA90, intrinsic viscosity 0.09 dL/g; number of terminal hydroxyl groups, 1.9; number-average molecular weight Mn, 2,000, SABIC's Innovative Plastics |
| G | Tert-Butylphenyl-glycidylether, Polypox R7, epoxy-bearing reactive diluent |
| B | Dicyandiamide, Dyhard 100SF, AlzChem |
| C | N,N-dimethylurea, Mw: 88.11 g/mol, Sigma Aldrich |
| F1 | Calcium carbonate |
| F2 | Calcium oxide |
| F3 | Pyrogenic silica |
| Pigment | Carbon black |
| AP | Adhesion promoter, Adeka EP-49-10P2, Adeka |
| | Poly-THF 2000 (difunctional polybutylene glycol) (OH equivalent weight = about 1000 g/OH equivalent), BASF |
| | PolyBD R45V (hydroxyl-terminated polybutadiene) (OH equivalent weight = about 1230 g/OH equivalent), Cray Valley |
| | Isophorone diisocyanate (= *"IPDI*"), Evonik |

### Raw materials used.

### Production of the compositions

The reference compositions Ref.1 to Ref.5 and the inventive compositions E1 to E3 were produced according to the compositions in table 1, wherein the stated amounts are in parts by weight.

The ratio of the proportion of the epoxy groups of the liquid epoxy resin **A** mol / proportion of curing agent **B** in mol **(A/B)** is indicated as "B-index" in mol/mol. The ratio of the proportion of accelerator **C** in grams per mole of the sum of the epoxy groups of the liquid epoxy resin **A** is indicated as "C-index" in g/mol.

The compositions E1 and E2 had a viscosity at 23°C between 800 - 1200 Pa*s, the composition E3 had a viscosity at 23°C between 1800 - 2200 Pa*s. The viscosity was measured with a rheometer in oscillation using a plate-plate geometry with the following parameters: 5 Hz, measurement gap 1 mm, plate-plate diameter 25 mm, 1% deformation.

### Test methods:

### Tensile strength (TS), elongation at break (EB) and modulus of elasticity (E-modulus) (DIN EN ISO 527)

An adhesive sample was pressed between two Teflon papers to a layer thickness of 2 mm. After curing at 180°C for 30 min, the Teflon papers were removed, and the specimens were die-cut to the DIN standard state. The test specimens were examined under standard climatic conditions at a strain rate of 2 mm/min. Tensile strength (TS), elongation at break and the 0.05-0.25% modulus of elasticity were measured to DIN EN ISO 527 at a temperature of 23°C.

Lap shear strength oven curing for 40 min/180°C ("LSS initial") (DIN EN 1465) Cleaned test specimens of HDG H420 steel (thickness 1.2 mm) that had been reoiled with Anticorit PL 3802-39S were bonded with the adhesive over a bonding area of 25 x 10 mm with glass beads as spacer in a layer thickness of 0.2 mm, and cured at oven temperature 180°C for 40 min.

Lap shear strength was determined on a tensile tester at a strain rate of 10 mm/min in a triple determination to DIN EN 1465 at a temperature of 23°C ("LSS initial").

### Lap shear strength oven curing for 40 min/180°C and 90 cycles PV1210 ("LSS 90 cycles") (DIN EN 1465)

Cleaned test specimens of HDG H420 steel (thickness 1.2 mm) that had been reoiled with Anticorit PL 3802-39S were bonded with the adhesive over a bonding area of 25 x 10 mm with glass beads as spacer in a layer thickness of 0.2 mm, and cured at oven temperature 180°C for 40 min. For 90 cycles PV1210, a test cycle lasts 1 day which consists of: 4h salt spray with 5% NaCl solution at 35°C, followed by 4h at 23°C with a relative humidity of 50%, followed by 16h at 40°C and a relative humidity of 100%. After 5 cycles, a regeneration phase follows for 2 days at 23°C with 50% relative humidity.

Lap shear strength was determined on a tensile tester at a strain rate of 10 mm/min in a triple determination to DIN EN 1465 at a temperature of 23°C ("LSS 90 cycles").

The reduction from the lap shear strength values of "LSS initial" and "LSS 90cycles" in percentage is show as "LSS loss" (percentage drop).

### Impact peel strength (IP @ 23°C/-30 °C) (ISO 11343)

The specimens were produced with the adhesive and DC04+ZE steel with dimensions of 90 x 20 x 0.8 mm. The bonding area here was 20 x 30 mm at a layer thickness of 0.3 mm with glass beads as spacer. The samples were cured for 40 minutes at oven temperature 180°C. Impact peel strength was measured at 23°C, or at -30°C, as a triple determination on a Zwick 450 impact pendulum. The impact peel strength reported is the average force in N/mm under the measurement curve from 25% to 90% to ISO11343.

### T-peel strength (DIN 53281)

130 x 25 mm test sheets of HDG H420 steel (thickness 1.2 mm) were prepared. Test sheets were processed at a height of 30 mm with a suitable die-cutting machine (90°). The cleaned 100 x 25 mm surfaces that had been reoiled with Anticorit PL 3802-39S were bonded to the adhesive with glass beads as spacer in a layer thickness of 0.3 mm, and cured at oven temperature 180°C for 40 min. T-peel strength was determined on a tensile testing machine at a strain rate of 100 mm/min in a triplicate determination as peel force in N/mm in the traversed distance range from 1/6 to 5/6 of the distance covered.

**Table 1, n.d. = not determined**

| **Composition** | **Ref.1** | **E1** | **E2** | **E3** | **Ref.2** | **Ref.3** | **Ref.4** | **Ref.5** |
|---|---|---|---|---|---|---|---|---|
| G | 3 | 3 | 3 | 3 | 3 | 3 | 3 | 3 |
| A | 60 | 55 | 50 | 45 | 50 | 45 | 40 | 35 |
| PPE | 0 | 5 | 10 | 15 | 0 | 5 | 10 | 15 |
| AP | 3 | 3 | 3 | 3 | 3 | 3 | 3 | 3 |
| D1 | 15 | 15 | 15 | 15 | 25 | 25 | 25 | 25 |
| B | 6.14 | 5.66 | 5.18 | 4.70 | 5.18 | 4.70 | 4.22 | 3.73 |
| C | 0.38 | 0.35 | 0.32 | 0.29 | 0.32 | 0.29 | 0.26 | 0.23 |
| F1 | 6 | 6 | 6 | 6 | 6 | 6 | 6 | 6 |
| F2 | 5 | 5 | 5 | 5 | 5 | 5 | 5 | 5 |
| F3 | 5 | 5 | 5 | 5 | 5 | 5 | 5 | 5 |
| Pigment | 0.15 | 0.15 | 0.15 | 0.15 | 0.15 | 0.15 | 0.15 | 0.15 |
| **Total (wt.-%)** | 103.67 | 103.16 | 102.65 | 102.14 | 102.65 | 102.14 | 101.63 | 101.12 |
| B Index [mol EP /Dicy] | 5.22 | 5.22 | 5.22 | 5.22 | 5.22 | 5.22 | 5.22 | 5.22 |
| C- Index [g / mol EP] | 1 | 1 | 1 | 1 | 1 | 1 | 1 | 1 |
| (A+PPE)/D | 4 | 4 | 4 | 4 | 2 | 2 | 2 | 2 |
| A/PPE | - | 11 | 5 | 3 | - | 9 | 4 | 2.33 |
| A/D | 4 | 3.67 | 3.33 | 3 | 2 | 1.8 | 1.6 | 1.4 |
| D/PPE | - | 3 | 1.5 | 1 | - | 5 | 2.5 | 1.67 |
| E-Module [MPa] | n.d. | 1750 | 1700 | 1400 | 1040 | 626 | 493 | 529 |
| Elongation [%] | n.d. | 2.6 | 3.3 | 1.4 | 3.3 | 15.5 | 26 | 17 |
| Tensile strength [MPa] | n.d. | 27.5 | 26.6 | 14.9 | 17.6 | 17.9 | 16.3 | 13.1 |
| LSS initial [MPa] | 29.7 | 35.6 | 33.6 | 27.3 | 31.4 | 30.9 | 30 | 27 |
| LSS 90 cycles [MPa] | 10.8 | 19.5 | 22.8 | 23.3 | 19.5 | 19.1 | 18 | 17.3 |
| LSS loss | 64% | 45% | 32% | 15% | 38% | 38% | 40% | 36% |
| IP @ 23°C [N/mm] | 6.4 | n.d. | 17.6 | 12 | 35.6 | 38 | 37.5 | 31.2 |
| IP @ -30°C [N/mm] | 4.6 | 5.3 | 4.8 | 2.8 | 30 | 33.2 | 7.4 | 1.8 |
| T-peel [N/mm] | 4.2 | 5.7 | 6.2 | 4.9 | 12.4 | 14 | 13.7 | 14.3 |

## Claims

1. A thermosetting one-component epoxy resin composition comprising:
a) at least one liquid epoxy resin **A** having an average of more than one epoxy group per molecule;
b) at least one latent curing agent **B** for epoxy resins, preferably dicyandiamide; and
c) at least one toughness improver **D,** preferably selected from the group consisting of terminally blocked polyurethane polymers **D1** and liquid rubbers **D2,** preferably a terminally blocked polyurethane polymer **D1;**
d) at least one polyphenylene ether **PPE,** preferably having on molecular ends thereof an average of 1.5 to 3 phenolic hydroxyl groups per molecule;
wherein the weight ratio of the sum of the at least one liquid epoxy resin **A** and the at least one polyphenylene ether **PPE** to the at least one toughness improver **D ((A+PPE)/D)** is from 2.7 - 12 and wherein the weight ratio of the at least one toughness improver **D** to the at least one polyphenylene ether **PPE (D/PPE)** is from 0.85 - 5.

2. The thermosetting one-component epoxy resin composition as claimed in claim 1, **characterized in that** the weight ratio of the sum of the at least one liquid epoxy resin **A** and the at least one polyphenylene ether **PPE** to the at least one toughness improver **D ((A+PPE)/D)** is from 3 - 8, preferably 3.5 - 6, more preferably 3.5 - 4.8.

3. The thermosetting one-component epoxy resin composition as claimed in any of the preceding claims, **characterized in that** the weight ratio of the at least one toughness improver **D** to the at least one polyphenylene ether **PPE (D/PPE)** is from 1 - 3, preferably 1.1 - 2.5, more preferably 1.3 - 1.8.

4. The thermosetting one-component epoxy resin composition as claimed in any of the preceding claims, **characterized in that** the weight ratio of the at least one liquid epoxy resin **A** to the at least one polyphenylene ether **PPE (A/PPE)** is from 2 - 12.5, preferably 3 - 11, more preferably 4 - 7.5; and/or the weight ratio of the at least one liquid epoxy resin **A** to the at least one toughness improver **D (A/D)** is from 2.5 - 3.75, preferably 3 - 3.66, more preferably 3.2 - 3.5.

5. The thermosetting one-component epoxy resin composition as claimed in any of the preceding claims, **characterized in that** the at least one liquid epoxy resin A has the formula (I) 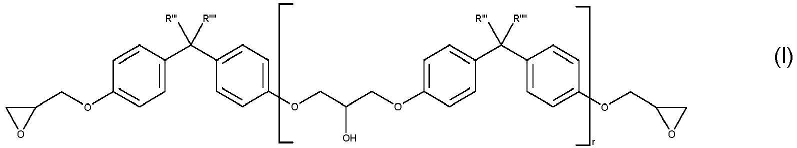 wherein the substituents R‴ and Rʺʺ are each independently H or CH₃, preferably H, the index r has a value of 0 to 1, preferably, r has a value of less than 0.2.

6. The thermosetting one-component epoxy resin composition as claimed in any of the preceding claims, **characterized in that** the polyphenylene ether **PPE** is of the formula (II) 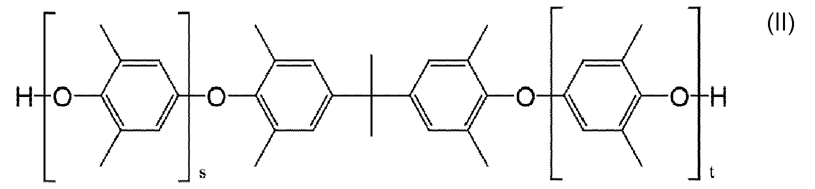 wherein the combined value of "s" and "t" is from 1 to 30, preferably, "s" is from 0 to 20 and "t" is preferably from 0 to 20.

7. The thermosetting one-component epoxy resin composition as claimed in any of the preceding claims, **characterized in that** the thermosetting one-component epoxy resin composition additionally includes at least one accelerator **C** selected from the list consisting of substituted ureas, imidazoles, imidazolines and blocked amines, preferably imidazoles and substituted ureas, most preferred substituted ureas.

8. The thermosetting one-component epoxy resin composition according to claim 7, **characterized in that** the ratio of the proportion of accelerator **C** in grams per mole of the epoxy groups of the liquid epoxy resin **A** is preferably 0.1 -5.0 g/mol of epoxy groups, especially 0.3 - 3.0 g/mol of epoxy groups, more preferably 0.5 - 2.0 g/mol of epoxy groups, most preferably 0.6 - 1.0 g/mol of epoxy groups.

9. The thermosetting one-component epoxy resin composition as claimed in any of the preceding claims, **characterized in that** the thermosetting one-component epoxy resin composition additionally includes at least one filler **F,** preferably selected from the group consisting of calcium carbonate, calcium oxide, wollastonite, titanium oxide, and fumed silicas; preferably the total proportion of the filler **F** is 5 - 35 % by weight preferably 10 - 25 % by weight, more preferably 15 -20 % by weight, based on the total weight of the thermosetting one-component epoxy resin composition.

10. The thermosetting one-component epoxy resin composition as claimed in any of the preceding claims, **characterized in that** the ratio of the proportion of the sum of the epoxy groups of the liquid epoxy resin **A** in mol / proportion of curing agent **B** in mol **(A/B)** is 4 - 8, preferably 4.5 - 7.0, more preferably 5.0 - 6.0, most preferably 5.0 - 5.5.

11. The thermosetting one-component epoxy resin composition as claimed in any of the preceding claims, **characterized in that** the proportion of the liquid epoxy resin **A** is 35 - 65 % by weight, more preferably 40 - 60 % by weight, most preferably 45 - 55 % by weight, based on the total weight of the one-component epoxy resin composition.

12. The thermosetting one-component epoxy resin composition as claimed in any of the preceding claims, **characterized in that** the one-component epoxy resin composition has a viscosity at 23°C of 3300 - 2500 Pa*s, especially 500 - 2200 Pa*s, preferably 700 - 1500 Pa*s, more preferably 800 - 1200 Pa*s.

13. The use of a thermosetting one-component epoxy resin composition as claimed in any of claims 1 to 12 as one-component thermosetting adhesive, especially as thermosetting one-component bodywork adhesive in motor vehicle construction.

14. A process for the adhesive bonding of heat-stable substrates, comprising the stages of:
i) applying a thermosetting one-component epoxy resin composition as claimed in any of claims 1 to 12 to the surface of a heat-stable substrate **S1,** especially of a metal;
ii) contacting the thermosetting one-component epoxy resin composition applied with the surface of a further heat-stable substrate **S2,** especially of a metal;
iii) heating the composition to a temperature of 100-220°C, especially of 120-200°C, preferably between 130 and 190°C, more preferably between 130 and 180°C;
in which the substrate **S2** consists of the same material as or a different material from the substrate **S1.**

15. The use of at least one polyphenylene ether **PPE,** preferably having on molecular ends thereof an average of 1.5 to 3 phenolic hydroxyl groups per molecule, as described as the polyphenylene ether **PPE** in claims 1 to 11, for increasing the corrosion resistance of a one-component thermosetting epoxy resin composition, especially a thermosetting epoxy adhesive, preferably in motor vehicle construction and sandwich panel construction, more preferably it is a one-component thermosetting epoxy resin composition as claimed in any of claims 1 to 12.
